# FASCICULE DE BREVET EUROPEEN

(11) **EP 1 218 438 B1**
(45) Date de publication et mention de la délivrance du brevet: **08.09.2004**
(21) Numéro de dépôt: 00962601.1
(22) Date de dépôt: 11.09.2000
(51) Int. Cl.: C08G 65/329, C11D 1/52, C08G 65/26

(54) **SUPERAMIDES POLYALCOXYLEES EVENTUELLEMENT FONCTIONNALISEES, UTILISATION EN TANT QU'EMULSIFIANTS**
POLYALKOXYLIERTE SUPERAMIDE UND IHRE VERWENDUNG ALS EMULGIERMITTEL
POLYALKOXYLATED SUPERAMIDES OPTIONALLY FUNCTIONALISED, USE AS EMULSIFIERS

(30) Priorité: 09.09.1999 FR 9911295
(43) Date de publication de la demande: 03.07.2002
(73) Titulaire: RHODIA CHIMIE, 92512 Boulogne Billancourt Cedex (FR)
(72) Inventeur: LE HELLOCO, Jean-Guy, F-92300 Levallois Perret (FR); JOYE, Jean-Luc, Cranbury, NJ 08512 (US); TAVERNA, Cristiano, Carlo, I-20010 Vanzago (IT)
(74) Mandataire: Boittiaux, Vincent
(86) Numéro de dépôt international: PCT/FR2000/002502
(87) Numéro de publication internationale: WO 2001/018092

(56) Documents cités:
- WO-A-98/13450
- DE-A- 1 916 283
- DE-A- 2 605 502
- DE-A- 19 650 537
- DATABASE WPI Section Ch, Week 199710 Derwent Publications Ltd., London, GB; Class A96, AN 1997-103672 XP002139619 & JP 08 337560 A (KAWAKEN FINE CHEM CO LTD), 24 décembre 1996 (1996-12-24)
- DATABASE WPI Section Ch, Week 199539 Derwent Publications Ltd., London, GB; Class A97, AN 1995-298298 XP002139620 & JP 07 194959 A (KAWAKEN FINE CHEM CO LTD), 1 août 1995 (1995-08-01)
- DATABASE WPI Section Ch, Week 199739 Derwent Publications Ltd., London, GB; Class A97, AN 1997-420718 XP002139621 & JP 09 188894 A (KAO CORP), 22 juillet 1997 (1997-07-22)
- DATABASE WPI Section Ch, Week 199313 Derwent Publications Ltd., London, GB; Class A96, AN 1993-104540 XP002139622 & JP 05 043889 A (KANEBO LTD), 23 février 1993 (1993-02-23)

## Description

La présente invention a pour objet des superamides polyalcoxylées, éventuellement fonctionnalisées. Plus particulièrement elle a trait à des superamides comprenant un bloc dérivé de l'oxyde de propylène, puis un bloc dérivé de l'oxyde d'éthylène.

La présente invention a de même pour objet leur utilisation en tant qu'agent émulsifiant, de préférence d'huiles.

Elle a de plus pour objet l'utilisation de tels composés comme agent de lubrification, ou encore comme agent anti-corrosion.

Par le terme "superamides", on désigne la famille des alcanolamides obtenues par transamidification d'un ester d'acide gras.

Il existe des alcanolamides obtenues par amidification d'un acide gras. Elles sont cependant obtenues sous forme d'un mélange comprenant l'amide, l'amine, l'acide gras, et l'eau. Typiquement, la concentration en amide est égale à 60-65%.

Par contre dans le cas des superamides, le mélange final contient plus de 90% de superamides, ce qui constitue un avantage évident. En effet, lors de la synthèse de la superamide, l'alcool provenant de l'ester d'acide gras mis en oeuvre, est distillé pendant le cours de la réaction, rendant cette dernière complète.

Le document JP 08 337560 décrit des superamides de formule

RCONH(CH₂CH₂)ₚ(EO)ₘ(PO)ₕH.

Ces composés, terminés par des unités d'oxyde de propylène, présentent des propriétés émulsifiantes qui ne suffisantes. Le document JP 09188894 décrit d'autres composés, des carboxylates d'aminoéthers présentant des séquences d'oxydes de propylène et d'oxydes d'éthylène. Le document DE 19650151 décrit des superamides présentant des unités d'oxyde d'éthylène et/ou d'oxyde de propylène, selon une séquence non contrôlée.

La présente invention à pour objet de proposer d'autres superamides, présentant des propriétés d'émulsification intéressantes.

Les superamides selon l'invention correspondent aux formules (1) et/ou (II), suivantes :

[R¹-CONR²-CH₂CHR³-O-(CHR⁴-CHR⁵O)ₘ-(CH₂CH₂O)ₙ]ₚ-X (I)

R¹-CON-[CH₂CHR³-O-(CHR⁴-CHR⁵O)ₘ-(CH₂CH₂O)ₙ-X]₂ (II)

formules dans lesquelles :
R¹ représente un radical hydrocarboné en C₇-C₂₂, linéaire ou ramifié, saturé ou non, éventuellement porteur d'au moins un groupement hydroxyle,
R² représente un atome d'hydrogène ou un radical hydrocarboné en C₁-C₄ ;
R³ représente un atome d'hydrogène ou un radical hydrocarboné en C₁-C₄ ;
R⁴ et R^{5,} identiques ou non, représentent un atome d'hydrogène ou un radical alkyle comprenant 1 ou 2 atomes de carbone, à la condition que l'un au plus de ces deux radicaux soit un atome d'hydrogène,
X représente un atome d'hydrogène, un radical hydrocarboné en C₁-C₆, un groupement phosphate, carboxylate, sulfate, sulfonate,
m est un nombre moyen compris entre 0 exclu et 20,
n est un nombre moyen compris entre 0 exclu et 50,
p vaut 1 ou 2, selon la nature de X.

Le radical R¹ est plus particulièrement un radical hydrocarboné, linéaire ou ramifié, saturé ou non, en C₁₀-C₂₂, éventuellement porteur d'au moins un groupement hydroxylé. De préférence, ledit radical comporte au moins une insaturation éthylénique.

Le radical R¹ dérive plus précisément d'acides gras ou d'huiles d'origine animale ou végétale.

Comme exemples d'acides gras saturés en C₁₀-C₂₂, on peut citer entre autres les acides laurique, caprique, décanoïque, stéarique, isostéarique, gadoléique, myristique, ou leurs mélanges.

En tant qu'acides gras en C₁₀-C₂₂ porteurs d'au moins une insaturation éthylénique, on peut citer, sans intention de s'y limiter, les acides lindérique, myristoléique, palmitoléique, oléique, pétrosélénique, doeglique, érucique, linoléique, linolénique, isanique, stéarodonique, arachidonique, chypanodonique, ricinoléique, ou leurs mélanges.

Parmi les acides précités, le radical R¹ dérive plus particulièrement d'acides gras choisis parmi les acides palmitoléique, oléique, pétrosélénique, érucique, linoléique, linolénique, ricinoléique, ou leurs mélanges.

En tant qu'huiles dont dérive le radical R¹, on peut citer les huiles d'origine animale ou végétale.

Comme huiles d'origine animale convenables, on peut citer en autres, les huiles de cachalot, dauphin, baleine, phoque, sardine, hareng, squale, foie de morue ; pied de boeuf ainsi que les graisses de boeuf, de porc, de cheval, de mouton (suifs).

A titres d'exemples d'huiles d'origine végétale, on peut mentionner, entre autres, les huiles de colza, tournesol, arachide, olive, noix, maïs, soja, lin, chanvre, pépins de raisin, coprah, palme, graines de coton, babassu, jojoba, sésame, ricin, coriandre. L'huile de colza est préférée.

Enfin, R¹ peut dériver de produits résultant de réactions d'alcoolyse, plus précisément de méthanolyse, des huiles précitées.

Les radicaux R² et R³, identiques ou non, représentent un atome d'hydrogène ou un radical hydrocarboné en C₁-C₄, qui est plus particulièrement saturé. De préférence les radicaux R² et R³ représentent un atome d'hydrogène, les radicaux méthyle, éthyle, propyle et isomères, butyle et isomères.

Les radicaux R⁴ et R⁵ sont plus préférentiellement choisis parmi l'hydrogène ou le radical méthyle, à la condition qu'au moins l'un des deux radicaux, mais non les deux simultanément, représente un atome d'hydrogène. Ainsi, selon ce mode de réalisation préféré, ce motif dérive de l'oxyde de propylène.

Le coefficient m, représentant un nombre moyen, varie entre 0 exclu et 20. De préférence ce coefficient est compris entre 0 exclu et 10.

Le coefficient n, représentant un nombre moyen, varie entre 1 et 50, plus particulièrement entre 1 et 20.

Les composés selon la présente invention peuvent se trouver sous une forme non ionique ou ionique.

Ainsi, selon la première possibilité, le radical X représente un atome d'hydrogène, ou un radical hydrocarboné en C₁-C₆. Dans un tel cas, la valeur du coefficient p est de 1.

Selon la seconde possibilité, les superamides se trouvent sous une forme ionique.

Une première variante de cette possibilité correspond à des composés pour lesquels X représente une fonction phosphate. Pour cette première variante, on peut envisager des superamides dont le coefficient p vaut 1 (monoester phosphate) ou p vaut 2 (diester phosphate). Exprimé plus précisément, dans le cas de la formule (I), la superamide phosphatée correspond à la formule suivante :

[A]ₚ-P(=O)(OM)_{p'}.

Dans cette formule :
A représente

   R¹-CONR²-CH₂CHR³O-(CHR⁴-CHR⁵O)ₘ-(CH₂CH₂O)ₙ-
R¹, R², R³, R⁴, R⁵, m et n étant définis auparavant,
M représente un atome d'hydrogène, un métal alcalin ou alcalino-terreux, un reste ammonium de formule N(R)₄⁺ avec R, identiques ou non, correspondant à un atome d'hydrogène, un radical hydrocarboné, saturé ou non, linéaire, ramifié ou cyclique, en C₁-C₂₂, de préférence en C₁-C₆, éventuellement porteur d'au moins un groupement hydroxyle,
p correspondant à 1 ou 2, p' à 2 ou 1, et p + p' = 3.

Une deuxième variante de cette possibilité correspond à des composés pour lesquels X représente une fonction carboxylate de formule -(CH₂)ᵣ-COOM, dans laquelle :
M a la même définition que précédemment,
r est égal à 1 ou 2.

Selon une troisième variante, les composés selon l'invention comprennent un radical X défini par la formule suivante -SO₃M, dans laquelle M est défini comme précédemment.

Selon une quatrième variante, les composés selon l'invention comprennent un radical X défini par la formule suivante -(CH₂)ₛ-SO₃M, formule dans laquelle M a la même signification que précédemment, et s est égal à 2 ou 3.

Notons que les superamides selon l'invention peuvent se trouver seules ou en mélanges.

Le procédé de préparation des superamides telles qu'elles viennent d'être décrites, consiste à mettre en oeuvre les étapes suivantes :
(a) on fait réagir, d'une part, un ester d'acide gras dont la partie relative à l'acide est un radical hydrocarboné en C₇-C₂₂, linéaire ou ramifié, saturé ou non, éventuellement porteur d'au moins un groupement hydroxyle ; la partie relative à l'alcool, un radical hydrocarboné en C₁-C₄, avec, d'autre part, une alcanolamine de formules NH₂R²-CH₂-CHR³-OH ou NH-(CH₂-CHR³-OH)₂, éventuellement en présence d'un composé basique.
(b) on fait réagir le produit obtenu à l'issue de l'étape (a) avec un composé de formule : 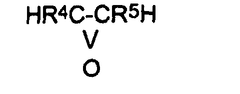 R⁴ et R⁵ étant définis comme précédemment,
(c) on fait réagir le produit obtenu à l'issue de l'étape (b) avec de l'oxyde d'éthylène,
(d) éventuellement, on effectue une étape de fonctionnalisation du composé obtenu lors de l'étape (c) dans le but de remplacer l'atome d'hydrogène terminal par un radical hydrocarboné, une fonction phosphate, carboxylate, sulfate ou encore sulfonate ;
les proportions des divers réactifs mis en oeuvre sont telles que les formules (I) ou (II) sont satisfaites.

L'étape (a) est mise en oeuvre en présence d'un ester d'acide gras ou d'un mélange de tels esters. Les acides gras décrits lors de la définition du radical R¹ peuvent être mis en oeuvre et la liste n'en sera pas reprise ici. Quant à la partie alcool de l'ester employé comme réactif dans l'étape (a), celle-ci dérive d'un alcool, de préférence en C₁-C₄. Plus particulièrement, les esters méthyliques, éthyliques, propyliques, isopropyliques, butyliques et isomères, peuvent être utilisés dans le procédé selon l'invention.

Notons que cette première étape peut être avantageusement mise en oeuvre à partir des produits résultants de réactions d'alcoolyse (de méthanolyse plus particulièrement) des huiles d'origine animale ou végétale, notamment choisies parmi celles mentionnées plus haut.

A titre d'exemples d'alcanolamines convenables à la mise en oeuvre du procédé, on peut citer notamment, la monoéthanolamine, la diéthanolamine, l'isopropylamine, la diisopropylamine, la méthyléthanotamine, l'éthyléthanolamine. La monoéthanolamine est utilisée de préférence.

Le rapport molaire de l'alcanolamine à l'ester est compris plus particulièrement entre 0,8 et 1,2. Un rapport proche de la stoechiométrie est convenable (entre 1 et 1,1).

L'étape (a) peut être réalisée en présence ou non d'un catalyseur basique. De préférence, un tel composé est employé. Ce dernier est plus particulièrement choisi parmi les alcoolates de métaux alcalins, comme le méthylate de sodium, l'éthylate de sodium, le méthylate de potassium, l'éthylate de potassium. On peut de même utiliser des hydroxydes de métaux alcalins comme la soude ou la potasse ; des carbonates de métaux alcalins, comme le carbonate de sodium, le carbonate de potassium.

La quantité en ce catalyseur, s'il est présent, varie habituellement entre 0,01 et 5 % en poids par rapport à la supéramide.

La température de réaction est généralement comprise entre 50 et 150°C. Elle est de manière avantageuse supérieure à la température d'ébullition de l'alcool produit au cours de la réaction, de manière à éliminer l'alcool dès son apparition dans le mélange.

Une fois la réaction effectuée, on met en oeuvre l'étape (b). Il est à noter qu'une étape de purification du produit obtenu n'est pas obligatoire.

L'étape (b) consiste donc à mettre en contact l'amide obtenu précédemment avec l'oxyde d'alkylène de formule :

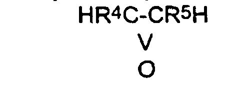

De préférence, l'oxyde d'alkylène est l'oxyde de propylène.

La réaction est réalisée plus particulièrement dans des conditions basiques, par exemple en mettant en oeuvre un catalyseur basique du type de celui mis en oeuvre lors de l'étape (a). Il est de même envisageable de mettre en oeuvre ladite réaction en présence d'un acide de Lewis, tel que le trichlorure de titane, le trifluorure de bore.

Le nombre de moles d'oxyde d'alkylène introduit est tel qu'il permette d'accéder à une superamide alcoxylée dont le coefficient m corresponde aux valeurs indiquées auparavant.

La température à laquelle la réaction est conduite varie habituellement entre 80 et 180°C.

De préférence, elle est effectuée sous une atmosphère inerte dans les conditions de réaction (azote par exemple).

Il est de même envisageable de mettre en oeuvre la réaction en présence d'un solvant. Ce dernier est choisi parmi les composés inertes dans les conditions de la réaction. A titre de composés convenables, on peut citer notamment les solvants hydrocarbonés aromatiques ou non, tels que l'hexane, le toluène, le xylène. Il est de même possible d'employer des solvants halogénés tels que le chloroforme, ainsi que des solvants de type éthers cycliques ou non, comme le dibutyléther, le tétrahydrofuranne.

Le produit obtenu à l'issue de cette étape (b) est avantageusement mis en contact, sans purification intermédiaire (celle-ci n'est en effet pas nécessaire) avec l'oxyde d'éthylène.

Le nombre de mole d'oxyde d'éthylène introduit est tel qu'il permette d'accéder à une superamide alcoxylée/éthoxylée dont le coefficient n corresponde aux valeurs indiquées dans les formules (I) et (II).

Les conditions de réactions sont par ailleurs semblables à celles détaillées pour l'étape (b). On pourra donc s'y référer.

De préférence, les étapes (b) et (c) sont réalisées dans des conditions basiques. Plus particulièrement, on ajoute la quantité de base nécessaire pour les deux étapes, au début de la première étape. Habituellement, la teneur en base varie entre 0,5 ‰ et 0,7 % en poids par rapport à la supéramide initiale, engagée dans les étapes (b) puis (c).

Une fois l'étape (c) terminée, il est préférable de procéder à la neutralisation de l'excès de base restant dans le milieu. Pour cela, on met en contact le milieu réactionnel avec un acide qui peut être choisi parmi les acides organiques, comme les acides carboxyliques, plus particulièrement l'acide acétique, par exemple; comme les acides sulfoniques, tels que l'acide dodecylbenzène sulfonique.

On peut de même mettre en oeuvre un acide minéral, comme l'acide chlorhydrique, l'acide sulfurique.

A titre illustratif, la quantité d'acide utilisé est telle que le pH d'un mélange comprenant 5 g de produit, additionné de 45 g d'éthanol et de 50 g d'eau soit compris entre 8 et 11.

A l'issue de l'étape (c), le produit obtenu est une superamide comprenant deux blocs oxylalkylénés, le premier étant un bloc oxyalkyléné comprenant au moins un radical différent de l'hydrogène (de préférence oxypropyléné) puis un bloc oxyéthyléné. Le radical X est l'hydrogène.

Ainsi que cela a été indiqué plus haut, il est possible de fonctionnaliser un tel composé, en mettant en oeuvre une étape (d).

Dans le cas où l'on souhaite remplacer l'hydrogène par un radical hydrocarboné, on met en contact un composé de formule R-Hal, dans laquelle R représente un radical hydrocarboné en C₁-C₆, de préférence saturé, Hal représente un atome d'halogène, de préférence le chlore, le brome.

Dans le cas où l'on souhaite remplacer l'hydrogène par un groupement phosphate, on met en contact le produit issu de l'étape (c) avec un réactif du type de l'acide phosphorique, l'acide polyphosphorique, l'anhydride phosphorique, l'oxychlorure de phosphore.

Dans le cas où l'on souhaite remplacer l'hydrogène par un groupement carboxylate, on met en contact le produit obtenu lors de l'étape (c) avec de l'acide monochloroacétique ou un sel de métal alcalin (r = 1) ou avec des dérivés de l'acide acrylique (r=2).

Dans le cas où l'hydrogène est à remplacer par un groupement sulfate, le produit obtenu lors de l'étape (c) est mis en contact avec le trioxyde de soufre, l'acide sulfurique ou l'oléum, l'acide chlorosulfonique, l'acide sulfamique.

Dans le cas où l'hydrogène est remplacé par un groupement sulfonate, le produit issu de l'étape (c) est mis à réagir avec des dérivés du chlorure de thionyle (s=2) suivi d'une mise ne contact avec de l'hydrogénosulfite; ou avec de la propane sulfone (s=3).

Notons que ces réactions de fonctionnalisation sont connues de l'homme de l'art.

La superamide polyoxyalkylénée selon la présente invention trouve de nombreuses applications. En effet, elle présente des propriétés d'anti-corrosion, de lubrification, d'émulsification.

Ainsi, la superamide polyoxyalkylénée peut être mise en oeuvre comme un agent émulsifiant pour des fluides comprenant des phases immiscibles ou peu miscibles entre elles.

Plus particulièrement, la supéramide selon l'invention présente des propriétés d'émulsification très intéressantes si l'une des phases précitées est une huile ou un dérivé d'huile, ou encore un ester d'acide gras, ces composés pouvant être présents seuls en mélange.

Les huiles peuvent être choisies parmi les huiles organiques, d'origine animale ou végétale, ou bien encore des huiles minérales.

Comme huiles d'origine animale, on peut citer en autres, les huiles de cachalot, dauphin, baleine, phoque, sardine, hareng, squale, foie de morue.

A titres d'exemples d'huiles d'origine végétale, on peut mentionner, entre autres, les huiles de colza, tournesol, arachide, olive, noix, maïs, soja, lin, chanvre, pépins de raisin, coprah, palme, graines de coton, babassu, jojoba, sésame, ricin, coriandre.

Parmi les huiles minérales susceptibles d'être émulsifiées par les composés selon l'invention, on peut citer les coupes pétrolières, les huiles naphténiques, paraffiniques, notamment.

En tant que dérivé d'huiles, on peut citer les produits d'alcoolyse, plus précisément de méthanolyse, des huiles.

Parmi les esters d'acide gras, conviennent les esters dont la partie acide dérive d'acides gras un radical hydrocarboné, linéaire ou ramifié, saturé ou non, en C₇-C₂₂, de préférence en C₁₀-C₂₂, éventuellement porteur d'au moins un groupement hydroxylé, et dont la partie alcool dérive d'alcool comprenant un radical hydrocarboné, linéaire ou ramifié, saturé ou non, en C₁-C₁₀. Les acides gras listés auparavant conviennent, ils ne seront pas repris dans cette partie. Les esters méthyliques, éthyliques, propyliques, butyliques peuvent notamment être mis en oeuvre.

On a remarqué que, de manière parfaitement inattendue, les superamides polyoxypropylénées - polyoxyéthylénées présentaient des propriétés d'émulsification des huiles, alors que les composés homologues portant des blocs polyoxyéthylénés - polyoxypropylénés ne possédaient pas une telle propriété.

De plus, les superamides selon l'invention présentent des propriétés d'agent anti-corrosion.

Enfin, les composés selon l'invention ne contiennent pas d'acide gras libre et/ou d'amine libres, ce qui représente un avantage pour certaines applications.

Parmi les nombreux domaines d'application des superamides selon l'invention, on peut citer, sans intention, toutefois, de s'y limiter :
- traitement du métal : notamment dans les fluides de coupe, les fluides de laminage, les fluides de tréfilage, les fluides de déformation, les fluides de protection, les fluides de refroidissement, dans lesquels les propriétés d'émulsifiant et/ou d'anti-corrosion sont recherchées ;
- textile : notamment en tant que lubrifiant dans les opérations de filage de la fibre textile, ou encore comme émulsifiant d'huiles minérales ou d'anti-mousses silicones ;
- élastomères : aide à la mise en forme (processing aid) ;
- phytosanitaire : en tant qu'émulsifiant pour toutes formulations phytosanitaires (concentrés émulsionnables, émulsions, micro-émulsions, entre autres) ;
- construction / revêtement : par exemple comme émulsifiant d'asphalte ;
- industrie papetière : émulsifiant d'huiles paraffiniques, d'agent anti-mousse (silicone notamment) ;
- traitement des eaux : émulsifiant de polymères
- exploitation pétrolière, détergence industrielle.

A titre d'utilisation plus particulière des superamides selon l'invention, citons le traitement du métal.

Les fluides mis en oeuvre dans cette application sont bien connus.

Ils se présentent habituellement sous la forme d'émulsions ou de micro-émulsions concentrées qui sont par la suite diluées par l'utilisateur. Ils peuvent aussi se présenter sous forme de concentrés émulsionnables mis en émulsion par l'utilisateur.

Ces fluides comprennent de préférence une huile, un dérivé ou encore un ester d'acide gras, comme phase peu ou non miscible dans l'eau. Les huiles organiques, minérales, leurs dérivés ainsi que les esters d'acides gras mentionnés auparavant peuvent être mis en oeuvre de manière appropriée dans cette application. De préférence, on met en oeuvre des huiles. Pour simplifier le texte, nous emploierons pour ce qui va suivre le terme huile pour désigner tous ces composés.

La teneur en huile peut varier dans de larges limites. Elle peut ainsi représenter jusqu'à 90 % en poids du concentré. De préférence, la teneur en eau varie entre 0 exclu et 50 % en poids.

La teneur en eau varie habituellement entre 0 exclu et 50 % en poids du fluide.

De plus la teneur en superamides polyoxyalkylénées selon l'invention varie plus particulièrement entre 0 exclu et 40 % en poids du fluide.

Outre l'eau, l'huile et le composé selon l'invention, les fluides peuvent comprendre éventuellement d'autres agents émulsifiants. Parmi les agents émulsifiants utilisables, on peut citer les tensioactifs non ioniques, anioniques. La teneur en ces composés varie habituellement entre 0 et 30 % en poids du fluide.

Les fluides peuvent en outre comprendre des additifs classiques de lubrification, comme par exemple des acides gras tels que ceux mentionnés auparavant ainsi que des esters de ces acides gras. On peut de même utiliser des additifs extrême-pression, qui sont des composés à base de chlore, de soufre, de phosphore, ou leurs combinaisons. Notons que ces fluides peuvent aussi comprendre des additifs classiques comme les esters polymères.

Les fluides peuvent en outre comprendre un ou plusieurs agents anti-corrosion choisi par exemple parmi les amines, les alcanolamines, les azoles, les carboxylates, les borates d'amines et boroalcanolamides. Lesdits fluides peuvent de même comprendre des biocides, des bactéricides, des agents anti-mousse, des agents de couplage (tels que des alcools et glycols).

La teneur en ces composés varie habituellement entre 0 et 20 % poids.

On a remarqué de manière inattendue, que si les superamides polyoxyalkylénées présentent pour la famille en général, des propriétés d'agent émulsifiant des huiles, d'agents anti-corrosion, certains superamides polyoxyalkylénées fonctionnalisés présentent des propriétés supplémentaires.

Ainsi, les alcanolamides selon l'invention, dans le cas où le radical X est un phosphate, présentent des propriétés anti-usure.

Quant aux alcanolamides pour lesquels le radical X est un carboxylate, ils présentent des propriétés dispersantes très avantageuses, notamment en présence de d'acides gras sous forme de sels de métaux alcalino-terreux (savons) ou de précipités.

Un exemple concret mais non limitatif de l'invention va maintenant être présenté.

### EXEMPLE

### 1/ Préparation de la superamide

Dans un réacteur, on introduit des esters méthyliques de l'huile de colza puis on ajoute de la monoéthanolamine (rapport molaire esters/monoéthanolamine : 1/1,025). On ajoute ensuite de la soude concentrée (0,1 % en poids par rapport à la supéramide obtenue).

La température est d'environ 140°C et la réaction est effectuée sous azote.

La durée de réaction est d'environ 6 heures.

Durant la réaction, le méthanol est distillé.

Le suivi de la réaction est réalisé en mesurant l'indice d'amine. On stoppe la réaction avec un indice inférieur à 15 mg de KOH/ g de produit.

On distille sous vide l'excès d'alcanolamine n'ayant pas réagi et on refroidit ensuite le mélange.

### 2/ Préparation de la superamide polyalcoxylée

La supéramide obtenue précédemment est fondue et introduite dans un réacteur. On y ajoute ensuite 0,2 % de potasse (le pourcentage est exprimé en poids par rapport à la supéramide ; la potasse est à 50%). Le mélange est chauffé à 120°C sous vide, pendant 1 heure.

Le réacteur est ensuite purgé et mis sous azote. Le mélange réactionnel est strippé sous vide.

Le mélange est ensuite chauffé à 150°C et l'on ajoute l'oxyde de propylène (3 moles) et l'on maintient l'ensemble à la même température pendant 1 heure.

Puis on ajoute l'oxyde d'éthylène (3 moles) dans les mêmes conditions. Une fois l'addition terminée, on maintient le mélange réactionnel à 150°C pendnt une heure.

Le mélange réactionnel est ensuite refroidi à 70°C et strippé sous vide pendant une heure.

L'excès de base présent dans le produit obtenu est neutralisé par ajout d'acide acétique.

A l'issue de ce procédé, on récupère un liquide.

### 3/ Evaluation des propriétés d'émulsification de la superamide

Les propriétés de la superamide obtenue au point 2/, ont été déterminées et comparées avec celles d'une supéramide portant les mêmes nombres de motifs oxyde d'éthylène (OE) et oxyde de propylène (OP) que la supéramide obtenue selon le point 2/- mais portant des blocs OP et OE dont la séquence est inversée (pour l'obtention de ce produit, on reproduit le procédé décrit au point 2/ mais en inversant l'ordre d'introduction de l'oxyde de propylène et de l'oxyde d'éthylène par rapport au mode opératoire décrit)

### Détermination du pouvoir émulsifant :

Dans un becher de 25 ml, on mélange 1 g du tensioactif à tester et 9 g de l'huile à tester.

Le contenu du becher est ensuite versé lentement dans une éprouvette de 100 ml contenant 90 ml d'eau permutée.

L'éprouvette est alors retournée 20 fois à la main, autour d'un axe médian perpendiculaire à l'axe de l'éprouvette, chaque retournement ayant une durée de 3-5 secondes.

Le pouvoir émulsifiant est évalué de la manière suivante :
- séparation immédiate des 2 phases : note 0
- crémage en moins de 10 secondes : note 1
- crémage en moins de 5 minutes : note 2
- pas de crémage en 5 minutes : note 3

Les tests ont été faits avec deux types d'huiles minérales :
Huile 1 : huile minérale paraffinique : Huile Neutrale 100 commercialisée par Mobil
Huile 2 : huile minérale naphténique : Catenex N 912 commercialisée par Shell.

A l'issue de ce test, le mélange comprenant la supéramide selon l'invention portait la note 3, pour les deux huiles testées, tandis que le mélange comparatif portait la note 0.

Un test de stabilité dans le temps des mélanges comprenant la supéramide selon l'invention a été réalisé, à 20°C et 40°C (mesure de la hauteur de crémage au bout d'un temps donné). On n'a pas constaté de destabilisation du mélange. En effet, la hauteur de crémage est nulle au bout de 24 heures, à 20 et 40°C.

## Revendications

1. Superamides polyalcoxylées de formules suivantes :
[R¹-CONR²-CH₂CHR³-O-(CHR⁴-CHR⁵O)ₘ-(CH₂CH₂O)ₙ]ₚ-X (I),
et/ou
R¹-CON-[CH₂CHR³-O-(CHR⁴-CHR⁵O)ₘ-(CH₂CH₂O)ₙ-X]₂ (II)
(II) formules dans lesquelles :
R¹ représente un radical hydrocarboné en C₇-C₂₂, linéaire ou ramifié, saturé ou non, éventuellement porteur d'au moins un groupement hydroxyle,
R² représente un atome d'hydrogène ou un radical hydrocarboné en C₁-C₄ ;
R³ représente un atome d'hydrogène ou un radical hydrocarboné en C₁-C₄ ;
R⁴ et R^{5,} identiques ou non, représentent un atome d'hydrogène ou un radical alkyle comprenant 1 ou 2 atomes de carbone, à la condition que l'un au plus de ces deux radicaux soit un atome d'hydrogène,
X représente un atome d'hydrogène, un radical hydrocarboné en C₁-C₆, un groupement phosphate, carboxylate, sulfate, sulfonate,
m est un nombre moyen compris entre 0 exclu et 20,
n est un nombre moyen compris entre 0 exclu et 50,
p vaut 1 ou 2, selon la nature de X.

2. Superamides polyalcoxylées selon la revendication précédente, **caractérisées en ce que** le radical R¹ est plus particulièrement un radical hydrocarboné, linéaire ou ramifié, saturé ou non, en C₁₀-C₂₂, éventuellement porteur d'au moins un groupement hydroxylé.

3. Superamides polyalcoxylées selon la revendication 2, **caractérisées en ce que** le radical R¹ dérive d'acides gras saturés en C₁₀-C₂₂, comme notamment les acides laurique, caprique, décanoïque, stéarique, isostéarique, gadoléique, myristique, ou leurs mélanges.

4. Superamides polyalcoxylées selon la revendication 2, **caractérisées en ce que** le radical R¹ dérive d'acides gras en C₁₀-C₂₂, comprenant au moins une insaturation éthylénique, comme notamment les acides lindérique, myristoléique, palmitoléique, oléique, pétrosélénique, doeglique, érucique, linoléique, linolénique, isanique. stéarodonique, arachidonique, chypanodonique, ricinoléique, ou leurs mélanges.

5. Superamides polyalcoxylées selon la revendication 1, **caractérisées en ce que** le radical R¹ dérive d'une huile d'origine animale ou végétale, ou de produits résultant de réactions d'alcoolyse des huiles précitées.

6. Superamides polyalcoxylées selon l'une quelconque des revendications précédentes, **caractérisées en ce que** les radicaux R² et R³, identiques ou non, représentent un atome d'hydrogène ou un radical hydrocarboné en C₁-C₄, saturé, comme les radicaux méthyle, éthyle, propyle et isomères, butyle et isomères.

7. Superamides polyalcoxylées selon l'une quelconque des revendications précédentes, **caractérisées en ce que** les radicaux R⁴ et R⁵ sont choisis parmi l'hydrogène ou le radical méthyle.

8. Procédé de préparation de superamides polyalcoxylées selon l'une quelconque des revendications précédentes, **caractérisé en ce que** l'on met en oeuvre les étapes suivantes :
(a) on fait réagir, d'une part, un ester d'acide gras dont la partie relative à l'acide est un radical hydrocarboné en C₇-C₂₂, linéaire, ramifié ou cyclique, saturé ou non, éventuellement porteur d'au moins un groupement hydroxyle ; la partie relative à l'alcool, un radical hydrocarboné en C₁-C₄, avec, d'autre part, une alcanolamine de formules NH₂R²-CH₂-CHR³-OH ou NH-(CH₂-CHR³-OH)₂, éventuellement en présence d'un composé basique,
(b) on fait réagir le produit obtenu à l'issue de l'étape (a) avec un composé de formule 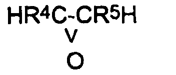 R⁴ et R⁵ étant définis comme précédemment,
(c) on fait réagir le produit obtenu à l'issue de l'étape (b) avec de l'oxyde d'éthylène,
(d) éventuellement, on effectue une étape de fonctionnalisation du composé obtenu lors de l'étape (c) dans le but de remplacer l'atome d'hydrogène terminal par un radical hydrocarboné, une fonction phosphate, carboxylate, sulfate ou encore sulfonate,
les proportions des divers réactifs mis en oeuvre sont telles que les formules (I) ou (II) sont satisfaites.

9. Utilisation de superamides polyalcoxylées selon l'une quelconque des revendications 1 à 7, en tant qu'émulsifiant.

10. Utilisation selon la revendication précédente, en tant qu'émulsifiant d'huile, d'un dérivé d'huile, ou encore d'un ester d'acide gras, ces composés pouvant être présents seuls en mélange.

11. Utilisation selon l'une des revendications 9 ou 10, en tant qu'additif dans des fluides mis en oeuvre dans le traitement des métaux.

12. Utilisation selon la revendication précédente, **caractérisée en ce que** la teneur en superamides polyalcoxylées dans le fluide est comprise entre 0 exclu et 40 % en poids dudit fluide.

13. Utilisation selon la revendication 11, **caractérisée en ce que** la teneur en huile dans le fluide représente jusqu'à 90 % en poids dudit fluide.

14. Utilisation selon l'une des revendications 11 à 13, **caractérisée en ce que** la teneur en eau varie entre 0 exclu et 50 % en poids du fluide.

15. Utilisation selon l'une des revendications 11 à 14, **caractérisée en ce que** le fluide comprend d'autres agents émulsifiants, à une teneur comprise 0 et 30 % en poids du fluide.

16. Utilisation selon l'une des revendications 11 à 15, **caractérisée en ce que** le fluide comprend au moins des additifs de lubrification, comme par exemple des acides gras ainsi que des esters d'acides gras ; ou au moins des additifs extrème-pression, ou au moins des agents anti-corrosion, des biocides, des bactéricides, des agents anti-mousse, avec une teneur comprise entre 0 et 20 % poids.

17. Utilisation de superamides polyalcoxylées selon l'une des revendications 1 à 7, en tant qu'agent anti-corrosion.

18. Utilisation de superamide polyalcoxylée selon l'une des revendications 1 à 7, en tant qu'agent lubrifiant.

19. Utilisation d'une superamide polyalcoxylée selon l'une des revendications 1 à 7, pour lequel X est un radical phosphate, en tant qu'agent anti-usure.

20. Utilisation d'une superamide polyalcoxylée selon l'une des revendications 1 à 7, pour lequel X est un radical carboxylate, en tant qu'agent dispersant.

## Patentansprüche

1. Polyalkoxylierte Superamide der folgenden Formeln:
[R¹-CONR²-CH₂CHR³-O-(CHR⁴-CHR⁵O)ₘ-(CH₂CH₂O)ₙ]ₚ-X (I),
und/oder
R¹-CON-[CH₂CHR³-O-(CHR⁴-CHR⁵O)ₘ-(CH₂CH₂O)ₙ-X]₂ (II)
(II) in welchen:
R¹ ein lineares oder verzweigtes, gesättigtes oder ungesättigtes, eventuell mindestens eine Hydroxylgruppe tragendes Kohlenwasserstoffradikal mit 7 bis 22 C darstellt,
R² ein Wasserstoffatom oder ein Kohlenwasserstoffradikal mit 1 bis 4 C darstellt;
R³ ein Wasserstoffatom oder ein Kohlenwasserstoffradikal mit 1 bis 4 C darstellt;
R⁴ und R⁵, identisch oder nicht-identisch, ein Wasserstoffatom oder ein Alkylradikal umfassend ein oder zwei Kohlenstoffatome darstellen, unter der Bedingung, dass höchstens eines dieser beiden Radikale ein Wasserstoffatom ist,
X ein Wasserstoffatom, ein Kohlenwasserstoffradikal mit 1 bis 6 C, eine Phosphatgruppe, Carboxylgruppe, Sulfatgruppe, Sulfonatgruppe darstellt,
m eine mittlere Zahl zwischen 0 ausschließlich und 20 ist,
n eine mittlere Zahl zwischen 0 ausschließlich und 50 ist,
p 1 oder 2 ist, gemäß der Art von X.

2. Polyalkoxylierte Superamide gemäß dem vorhergehenden Anspruch,
**dadurch gekennzeichnet, dass** das Radikal R¹ insbesondere ein lineares oder verzweigtes, gesättigtes oder ungesättigtes, eventuell mindestens eine Hydroxylgruppe tragendes Kohlenwasserstoffradikal mit 10 bis 22 C ist.

3. Polyalkoxylierte Superamide gemäß Anspruch 2,
**dadurch gekennzeichnet, dass** das Radikal R¹ von gesättigten Fettsäuren mit 10 bis 22 C stammt, wie insbesondere der Laurilsäure, der Caprinsäure, der Caprylsäure, der Stearinsäure, der Isostearinsäure, der Gadoleinsäure, der Myristinsäure oder ihrer Mischungen.

4. Polyalkoxylierte Superamide gemäß Anspruch 2,
**dadurch gekennzeichnet, dass** sich das Radikal R¹ von Fettsäuren mit 10 bis 22 C ableitet, die mindestens eine ungesättigte Ethylenbindung aufweisen, wie insbesondere der Lindersäure, Myristoleinsäure, Palmitoleinsäure, Ölsäure, Petroselinsäure, Doeglinsäure, Erukasäure, Linolsäure, Linolensäure, Isansäure, Stearidonsäure, Arachidonsäure, Cypanodonsäure, Rizinolsäure oder ihrer Mischungen.

5. Polyalkoxylierte Superamide gemäß Anspruch 1,
**dadurch gekennzeichnet, dass** sich das Radikal R¹ aus einem Öl tierischen oder pflanzlichen Ursprungs oder aus Produkten, die aus Alkoholyse-Reaktionen der genannten Öle hervorgehen, ableitet.

6. Polyalkoxylierte Superamide gemäß einem der vorhergehenden Ansprüche,
**dadurch gekennzeichnet, dass** die Radikale R² und R³, identisch oder nicht-identisch, ein Wasserstoffatom oder ein gesättigtes Kohlenwasserstoffradikal mit 1 bis 4 C wie die Methylradikale, Ethyradikale, Propylradikale und Isomere, Butylradikale und Isomere darstellen.

7. Polyalkoxylierte Superamide gemäß einem der vorhergehenden Ansprüche,
**dadurch gekennzeichnet, dass** die Radikale R⁴ und R⁵ aus Wasserstoff oder dem Methylradikal gewählt sind.

8. Verfahren zur Herstellung von polyalkoxylierten Superamiden gemäß einem der vorhergehenden Ansprüche,
**dadurch gekennzeichnet, dass** die folgenden Schritte umgesetzt werden:
(a) man lässt einerseits einen linearen, verzweigten oder zyklischen, gesättigten oder ungesättigten, eventuell mindestens eine Hydroxylgruppe tragenden Fettsäureester, dessen Säureteil ein Kohlenwasserstoffradikal mit 7 bis 22 C ist und dessen Alkoholteil ein Kohlenwasserstoffradikal mit 1 bis 4 C ist, mit andererseits einem Alkanolamin der Formeln
NH₂R²-CH₂-CHR³-OH
oder
NH-(CH₂-CHR³-OH)₂,
eventuell in Anwesenheit einer basischen Verbindung, reagieren,
(b) man lässt das am Ende des Schritts (a) erhaltene Produkt mit einer Verbindung der Formel 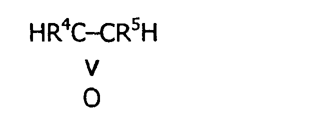 reagieren, wobei R⁴ und R⁵ wie vorhergehend definiert sind,
(c) man lässt das am Ende des Schritts (b) erhaltene Produkt mit Ethylenoxid reagieren,
(d) und führt eventuell einen Schritt zur Funktionalisierung der beim Schritt (c) erhaltenen Verbindung mit dem Ziel, das terminale Wasserstoffatom durch ein Kohlenwasserstoffradikal, eine Phosphat-, Carboxylat-, Sulfat- oder auch Sulfonat-Funktion zu ersetzen, wobei die Verhältnisgleichungen der verschiedenen Reagenzien so sind, dass die Formeln (I) oder (II) erfüllt sind.

9. Verwendung polyalkoxylierter Superamide gemäß einem der Ansprüche 1 bis 7 als Emulgiermittel.

10. Verwendung gemäß dem vorhergehenden Anspruch, als Emulgiermittel von Öl, eines Ölderivats oder auch eines Fettsäureesters, wobei diese Verbindungen als Mischung vorhanden sein können.

11. Verwendung gemäß einem der Ansprüche 9 oder 10 als Additiv in Fluiden, die bei der Behandlung von Metallen eingesetzt werden.

12. Verwendung gemäß dem vorhergehenden Anspruch,
**dadurch gekennzeichnet, dass** der Gehalt an polyalkoxylierten Superamiden im Fluid zwischen 0 ausschließlich und 40 Gewichtsprozent des Fluids ist.

13. Verwendung gemäß Anspruch 11,
**dadurch gekennzeichnet, dass** der Ölgehalt im Fluid bis zu 90 Gewichtsprozent des Fluids darstellt.

14. Verwendung gemäß einem der Ansprüche 11 bis 13, **dadurch gekennzeichnet, dass** der Wassergehalt zwischen 0 ausschließlich und 50 Gewichtsprozent des Fluids variiert.

15. Verwendung gemäß einem der Ansprüche 11 bis 14,
**dadurch gekennzeichnet, dass** das Fluid andere Emulgiermittel umfasst, mit einem Gehalt zwischen 0 und 30 Gewichtsprozent des Fluids.

16. Verwendung gemäß einem der Ansprüche 11 bis 15,
**dadurch gekennzeichnet, dass** das Fluid mindestens Schmierungsadditive wie z.B. Fettsäuren oder Fettsäureester umfasst; oder mindestens Hochdruckadditive oder mindestens Antikorrosionsmittel, Biozide, Bakterizide, Antischaummittel mit einem Gehalt zwischen 0 und 20 Gewichtsprozent.

17. Verwendung von polyalkoxylierten Superamiden gemäß einem der Ansprüche 1 bis 7 als Antikorrosionsmittel.

18. Verwendung polyalkoxylierter Superamide gemäß einem der Ansprüche 1 bis 7 als Schmiermittel.

19. Verwendung eines polyalkoxylierten Superamids gemäß einem der Ansprüche 1 bis 7, für welches X ein Phosphatradikal ist, als Antiverschleißmittel.

20. Verwendung eines polyalkoxylierten Superamids gemäß einem der Ansprüche 1 bis 7, für welches X ein Carboxylatradikal ist, als Dispergierungsmittel.

## Claims

1. Polyalkoxylated superamides with the following formulae:
[R¹-CONR²-CH₂CHR³-O-(CHR⁴-CHR⁵O)ₘ-(CH₂CH₂O)ₙ]ₚ-X (I)
and/or
R¹-CON-[CH₂CHR³-O-(CHR⁴-CHR⁵O)ₘ-(CH₂CH₂O)ₙ-X]₂ (II)
(II) in which formulae:
R¹ represents a linear or branched, saturated or unsaturated C₇-C₂₂ hydrocarbon radical, which optionally carries at least one hydroxyl group;
R² represents a hydrogen atom or a C₁-C₄ hydrocarbon radical;
R³ represents a hydrogen atom or a C₁-C₄ hydrocarbon radical;
R⁴ and R⁵, which may or may not be identical, represent a hydrogen atom or an alkyl radical containing 1 or 2 carbon atoms, provided that at most one of said two radicals is a hydrogen atom;
X represents a hydrogen atom, a C₁-C₆ hydrocarbon radical, or a phosphate, carboxylate, sulphate or sulphonate group;
m is an average number in the range 0 (excluded) to 20;
n is an average number in the range 0 (excluded) to 50;
p is 1 or 2, depending on the nature of X.

2. Polyalkoxylated superamides according to the preceding claim, **characterized in that** radical R¹ is a linear or branched, saturated or unsaturated C₁₀-C₂₂ hydrocarbon radical, optionally carrying at least one hydroxyl group.

3. Polyalkoxylated superamides according to claim 2, **characterized in that** radical R¹ is derived from saturated C₁₀-C₂₂ fatty acids, in particular lauric acid, capric acid, decanoic acid, stearic acid, isostearic acid, gadoleic acid, myristic acid and mixtures thereof.

4. Polyalkoxylated superamides according to claim 2, **characterized in that** radical R¹ is derived from C₁₀-C₂₂ fatty acids containing at least one ethylenically unsaturated bond, in particular linderic acid, myristoleic acid, palmitoleic acid, oleic acid, petroselenic acid, doeglic acid, erucic acid, linoleic acid, linolenic acid, isanic acid, stearodonic acid, arachidonic acid, chypanodonic acid, ricinoleic acid and mixtures thereof.

5. Polyalkoxylated superamides according to claim 1, **characterized in that** radical R¹ derives from an oil of animal or plant origin, or from products resulting from alcoholysis of the oils cited above.

6. Polyalkoxylated superamides according to any one of the preceding claims, **characterized in that** radicals R² and R³, which may or may not be identical, represent a hydrogen atom or a saturated C₁-C₄ hydrocarbon radical such as a methyl radical, an ethyl radical, a propyl radical or its isomers, or a butyl radical or its isomers.

7. Polyalkoxylated superamides according to any one of the preceding claims, **characterized in that** radicals R⁴ and R⁵ are selected from hydrogen or the methyl radical.

8. A process for preparing polyalkoxylated superamides according to any one of the preceding claims, **characterized in that** the following steps are carried out:
a) firstly, reacting a fatty acid ester the acid-derived portion of which is a linear, branched or cyclic, saturated or unsaturated C₇-C₂₂ hydrocarbon radical that may carry at least one hydroxyl group; and in which the alcohol-derived portion is a C₁-C₄ hydrocarbon radical, with an alkanolamine with formula NH₂R²-CH₂-CHR³-OH or NH-(CH₂-CHR³-OH)₂, optionally in the presence of a basic compound;
b) reacting the product obtained at the end of step a) with a compound with formula: 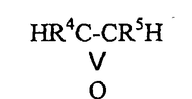 where R⁴ and R⁵ are as defined above;
c) reacting the product obtained at the end of step b) with ethylene oxide;
d) optionally, carrying out a step for functionalising the product obtained during step c) with the aim of replacing the terminal hydrogen atom with a hydrocarbon radical, a phosphate function, a carboxylate function, a sulphate function or a sulphonate function;
the proportions of the various reactants employed being such that formulae (I) or (II) are satisfied.

9. Use of polyalkoxylated superamides according to any one of claims 1 to 7 as an emulsifying agent.

10. Use according to the preceding claim, as an emulsifying agent for oil, an oil derivative or for a fatty acid ester, these compounds being present alone or as a mixture.

11. Use according to claim 9 or claim 10, as an additive in fluids used in treating metals.

12. Use according to the preceding claim, **characterized in that** the amount of polyalkoxylated superamides in the fluid is in the range 0 (excluded) to 40% by weight of said fluid.

13. Use according to claim 11, **characterized in that** the amount of oil in the fluid represents up to 90% by weight of said fluid.

14. Use according to any one of claims 11 to 13, **characterized in that** the water content is in the range 0 (excluded) to 50% by weight of the fluid.

15. Use according to any one of claims 11 to 14, **characterized in that** the fluid comprises other emulsifying agents, in an amount in the range 0 to 30% by weight of fluid.

16. Use according to any one of claims 11 to 15, **characterized in that** the fluid comprises at least lubricating additives, such as fatty acids and fatty acid esters; or at least extreme-pressure additives, or at least anti-corrosion agents, biocides, bactericides, anti-foaming agents, in an amount in the range 0 to 20% by weight.

17. Use of polyalkoxylated superamides according to any one of claims 1 to 7, as an anti-corrosion agent.

18. Use of a polyalkoxylated superamide according to any one of claims 1 to 7, as a lubricating agent.

19. Use of a polyalkoxylated superamide according to any one of claims 1 to 7, where X is a phosphate radical, as an anti-wear agent.

20. Use of a polyalkoxylated superamide according to any one of claims 1 to 7, where X is a carboxylate radical, as a dispersing agent.
